# EUROPÄISCHE PATENTSCHRIFT

(11) **EP 0 783 627 B1**
(45) Veröffentlichungstag und Bekanntmachung des Hinweises auf die Patenterteilung: **22.08.2001**
(21) Anmeldenummer: 96913461.8
(22) Anmeldetag: 03.05.1996
(51) Int. Cl.: F02M 61/18, F23D 11/38

(54) **VENTIL, INSBESONDERE BRENNSTOFFEINSPRITZVENTIL**
VALVE, IN PARTICULAR FUEL INJECTION VALVE
SOUPAPE, NOTAMMENT SOUPAPE D'INJECTION DE CARBURANT

(30) Priorität: 29.07.1995 DE 19527846
(43) Veröffentlichungstag der Anmeldung: 16.07.1997
(73) Patentinhaber: ROBERT BOSCH GMBH, 70442 Stuttgart (DE)
(72) Erfinder: ZIMMERMANN, Georg, D-70839 Gerlingen (DE); MAGENAU, Horst, D-70839 Gerlingen (DE); BÜHRING, Jürgen, D-70469 Stuttgart (DE); MÖRSCH, Gilbert, D-70563 Stuttgart (DE); HEYSE, Jörg, D-71706 Markgröningen (DE); KÖNIG, Harald, D-71272 Renningen (DE)
(86) Internationale Anmeldenummer: DE9600769
(87) Internationale Veröffentlichungsnummer: WO9705377

(56) Entgegenhaltungen:
- EP-A- 0 611 886
- WO-A-89/05914
- DE-A- 2 723 280
- PATENT ABSTRACTS OF JAPAN vol. 010, no. 286 (M-521), 27.September 1986 & JP,A,61 104156 (NIPPON DENSO CO.), 22.Mai 1986,

## Beschreibung

### Stand der Technik

Die Erfindung geht aus von einem Ventil, insbesondere Brennstoffeinspritzventil nach der Gattung des Hauptanspruchs. Es ist bereits aus der DE-OS 27 23 280 bekannt, an einem Brennstoffeinspritzventil stromabwärts einer Dosieröffnung ein Brennstoffaufbrechglied in der Form einer ebenen dünnen Scheibe auszuführen, die eine Vielzahl von bogenförmigen schmalen Schlitzen aufweist. Die gebogenen Schlitze, die durch Ätzen in der Scheibe eingebracht sind, sorgen mit ihrer Geometrie, also mit ihrer radialen Breite und ihrer Bogenlänge, dafür, daß ein Brennstoffschleier gebildet wird, der in kleine Tröpfchen aufbricht. Die jeweils in Gruppen angeordneten bogenförmigen Schlitze zerreißen den Brennstoff entsprechend ihrer in der Horizontalen eingebrachten Geometrie. Die einzelnen Schlitzgruppen müssen sehr exakt zueinander eingebracht werden, um das Aufbrechen des Brennstoffs in gewünschter Weise zu erreichen. Über die gesamte axiale Erstreckung des Aufbrechgliedes weisen die bogenförmigen Schlitze jeweils eine konstante Öffnungsweite auf. Durch diese Anordnung der Schlitze besteht die Gefahr einer Wiedervereinigung zu größeren Tropfen.

### Vorteile der Erfindung

Das erfindungsgemäße Ventil, insbesondere Brennstoffeinspritzventil mit den kennzeichnenden Merkmalen des Hauptanspruchs hat den Vorteil, daß eine gleichmäßige Feinstzerstäubung des Brennstoffs ohne Zusatzenergie erreicht wird, die eine sehr hohe Zerstäubungsgüte aufweist. Dies wird dadurch erreicht, daß eine am Brennstoffeinspritzventil vorgesehene Düsenplatte mehrere radial verlaufende Schlitze aufweist, so daß der abzuspritzende Brennstoff unmittelbar stromabwärts der Düsenplatte (Radialspaltdüse) mehrere Flachstrahlen (Flachlamellen) mit geringer Flüssigkeitslamellendicke bildet. Durch die Oberflächenspannung wird der gesamte Brennstoffkegel der Flachstrahlen in stromabwärtiger Richtung und also mit zunehmendem Durchmesser in seiner Brennstoffilmstärke immer dünner, bis er in kleinste Tröpfchen zerfällt. Diese feinen Tröpfchen weisen einen gegenüber dem Stand der Technik reduzierten sogenannten Sauter Mean Diameter (SMD) auf, also einen verringerten mittleren Tropfendurchmesser des abgespritzten Brennstoffs, wobei SMD von < 60 *µ*m erreichbar sind. Als Konsequenz können unter anderem die Abgasemission einer Brennkraftmaschine weiter reduziert und ebenso eine Verringerung des Brennstoffverbrauchs erzielt werden.

Als weiterer Vorteil ergibt sich aus der erfindungsgemäßen Anordnung, daß eine gleichmäßige Verteilung des abgespritzten Brennstoffs auf einer vergleichsweise großen Abspritzfläche erzielt wird. Dadurch liegt eine geringere Tröpfchenpackungsdichte im gebildeten Brennstoffspray vor, und eine gute Durchmischung mit der Saugrohrluftströmung der Brennkraftmaschine wird erreicht. Außerdem besteht dann eine geringere Gefahr einer Tröpfchenkoagulation, also einer Wiedervereinigung zu größeren Tropfen.

Durch die in den Unteransprüchen aufgeführten Maßnahmen sind vorteilhafte Weiterbildungen und Verbesserungen des im Hauptanspruch angegebenen Ventils, insbesondere Brennstoffeinspritzventils möglich.

Aufgrund des radialen Versatzes der Schlitze der Radialspaltdüse gegenüber dem Eintritt in eine stromaufwärts der Schlitze vorhandene Vertiefung der Düsenplatte ergibt sich ein S-förmiger Strömungsverlauf des Fluids. Dadurch erhält die Strömung eine Radialgeschwindigkeitskomponente, die auch im Austritt nicht verlorengeht. Durch den sogenannten S-Schlag mit den starken Strömungsumlenkungen wird der Strömung eine starke, zerstäubungsfördernde Turbulenz aufgeprägt.

### Zeichnung

Ein Ausführungsbeispiel der Erfindung ist in der Zeichnung vereinfacht dargestellt und in der nachfolgenden Beschreibung näher erläutert. Es zeigen Figur 1 ein teilweise dargestelltes Einspritzventil mit einer erfindungsgemäßen Düsenplatte, Figur 2 eine Düsenplatte mit radialen Schlitzen und Figuren 3 bis 8 Verfahrensschritte zur Herstellung einer Düsenplatte mittels Mikrostrukturierung und Galvanoabformung.

### Beschreibung der Ausführungsbeispiele

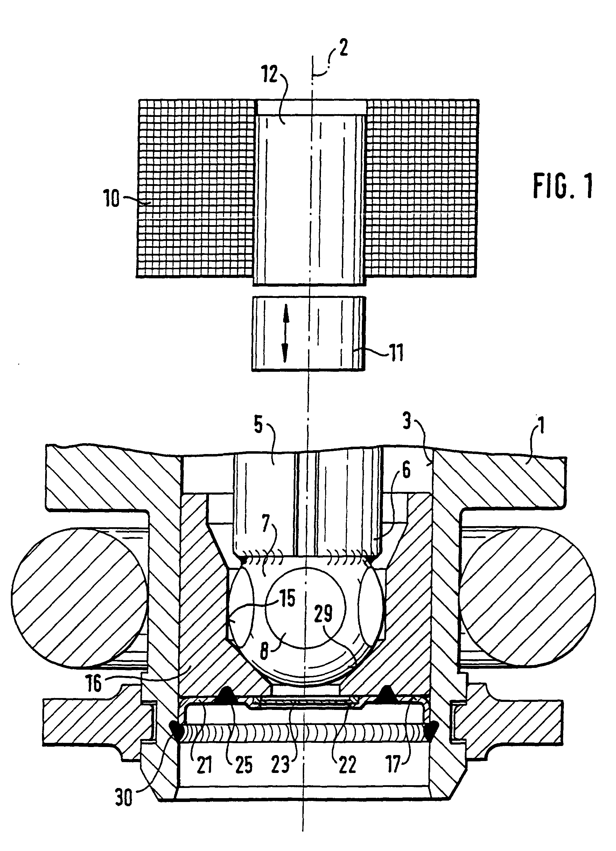

In der Figur 1 ist als ein Ausführungsbeispiel ein Ventil in der Form eines Einspritzventils für Brennstoffeinspritzanlagen von gemischverdichtenden fremdgezündeten Brennkraftmaschinen teilweise dargestellt. Das Einspritzventil hat einen rohrförmigen Ventilsitzträger 1, in dem konzentrisch zu einer Ventillängsachse 2 eine Längsöffnung 3 ausgebildet ist. In der Längsöffnung 3 ist eine z. B. rohrförmige Ventilnadel 5 angeordnet, die an ihrem stromabwärtigen Ende 6 mit einem z. B. kugelförmigen Ventilschließkörper 7, an dessen Umfang beispielsweise fünf Abflachungen 8 vorgesehen sind, verbunden ist.

Die Betätigung des Einspritzventils erfolgt in bekannter Weise, beispielsweise elektromagnetisch. Zur axialen Bewegung der Ventilnadel 5 und damit zum Öffnen entgegen der Federkraft einer nicht dargestellten Rückstellfeder bzw. Schließen des Einspritzventils dient ein angedeuteter elektromagnetischer Kreis mit einer Magnetspule 10, einem Anker 11 und einem Kern 12. Der Anker 11 ist mit dem dem Ventilschließkörper 7 abgewandten Ende der Ventilnadel 5 durch z. B. eine Schweißnaht mittels eines Lasers verbunden und auf den Kern 12 ausgerichtet.

Zur Führung des Ventilschließkörpers 7 während der Axialbewegung dient eine Führungsöffnung 15 eines Ventilsitzkörpers 16. In das stromabwärts liegende, dem Kern 12 abgewandte Ende des Ventilsitzträgers 1 ist in der konzentrisch zur Ventillängsachse 2 verlaufenden Längsöffnung 3 der z. B. zylinderförmige Ventilsitzkörper 16 durch Schweißen dicht montiert. An seiner dem Ventilschließkörper 7 abgewandten, unteren Stirnseite 17 ist der Ventilsitzkörper 16 mit einer z. B. topfförmig ausgebildeten Stützscheibe 21 konzentrisch und fest verbunden, die also unmittelbar an dem Ventilsitzkörper 16 anliegt. Die Stützscheibe 21 weist dabei eine ähnliche Form auf wie bereits bekannte topfförmige Spritzlochscheiben, wobei ein mittlerer Bereich der Stützscheibe 21 mit einer gestuften Durchgangsöffnung 22 versehen ist, um in ihr eine erfindungsgemäße Düsenplatte 23 auf zunehmen.

Die Verbindung von Ventilsitzkörper 16 und Stützscheibe 21 erfolgt beispielsweise durch eine umlaufende und dichte, mittels eines Lasers ausgebildete erste Schweißnaht 25. Durch diese Art der Montage ist die Gefahr einer unerwünschten Verformung der Stützscheibe 21 in ihrem mittleren Bereich mit der Durchgangsöffnung 22 und der darin eingebauten Düsenplatte 23 vermieden. Die Stützscheibe 21 ist des weiteren mit der Wandung der Längsöffnung 3 im Ventilsitzträger 1 beispielsweise durch eine umlaufende und dichte zweite Schweißnaht 30 verbunden.

Die Einschubtiefe des aus Ventilsitzkörper 16, topfförmiger Stützscheibe 21 und Düsenplatte 23 bestehenden Ventilsitzteils in die Längsöffnung 3 bestimmt die Größe des Hubs der Ventilnadel 5, da die eine Endstellung der Ventilnadel 5 bei nicht erregter Magnetspule 10 durch die Anlage des Ventilschließkörpers 7 an einer Ventilsitzfläche 29 des Ventilsitzkörpers 16 festgelegt ist. Die andere Endstellung der Ventilnadel 5 wird bei erregter Magnetspule 10 beispielsweise durch die Anlage des Ankers 11 an dem Kern 12 festgelegt. Der Weg zwischen diesen beiden Endstellungen der Ventilnadel 5 stellt somit den Hub dar.

Der kugelförmige Ventilschließkörper 7 wirkt mit der sich in Strömungsrichtung kegelstumpfförmig verjüngenden Ventilsitzfläche 29 des Ventilsitzkörpers 16 zusammen, die in axialer Richtung zwischen der Führungsöffnung 15 und der unteren Stirnseite 17 des Ventilsitzkörpers 16 ausgebildet ist.

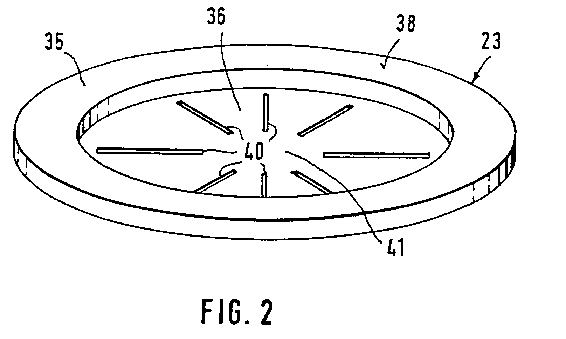

Die Figur 2 zeigt die Düsenplatte 23 vergrößert als einzelnes Bauteil. Die Düsenplatte 23 ist als ebene, flache, kreisförmige Scheibe ausgeführt, wobei ein kreisringförmiger Außenbereich 35 in axialer Richtung dicker ausgebildet ist als ein innerer kreisförmiger Abspritzbereich 36. Der Außenbereich 35, der den Abspritzbereich 36 vollständig umgibt, weist z. B. mit 0,2 mm die doppelte Dicke des Abspritzbereichs 36 auf. In der Stützscheibe 21 liegt die Düsenplatte 23 zentriert vor. Die Befestigung der Düsenplatte 23 am Einspritzventil und speziell am Ventilsitzkörper 16 erfolgt beispielsweise mittels einer Klemmung, die aufgrund der Kontur der Stützscheibe 21 möglich ist. Eine solche Einspannung als indirekte Befestigung der Düsenplatte 23 am Ventilsitzkörper 16 hat den Vorteil, daß im Gegensatz zu Verfahren wie Schweißen oder Löten eine temperaturbedingte Verformung der feinen Abspritzgeometrie vollständig vermieden ist. Die gestufte Durchgangsöffnung 22 in der Stützscheibe 21 ist maßlich so exakt gefertigt, daß die Düsenplatte 23 äußerst genau ohne Spannungen aufgenommen werden kann. Anstelle der ebenen Außenkontur kann die Düsenplatte 23 auch eine in axialer Richtung gestufte Außenkontur besitzen. Die Stützscheibe 21 stellt jedoch keineswegs eine ausschließliche Bedingung zur Befestigung der Düsenplatte 23 dar. Da die Befestigungsmöglichkeiten nicht erfindungswesentlich sind, soll hier nur der Verweis auf übliche bekannte Fügeverfahren, wie Schweißen, Löten oder Kleben, erfolgen. Im montierten Zustand liegt eine obere Stirnfläche 38 des Außenbereichs 35 der Düsenplatte 23 an der unteren Stirnseite 17 des Ventilsitzkörpers 16 an, während zwischen dem Abspritzbereich 36 und dem Ventilsitzkörper 16 aufgrund des vertieft ausgebildeten Abspritzbereichs 36 ein Hohlraum gebildet ist.

Der flachere Abspritzbereich 36 der Düsenplatte 23 besitzt mehrere, radial verlaufende, sternförmig angeordnete Schlitze 40 mit geringer Schlitz- bzw. Spaltweite. Die Schlitze 40, über die der Brennstoff abgespritzt wird, sind gleichmäßig über den Umfang des inneren Abspritzbereichs 36 verteilt, damit die Mengenverteilung im abgespritzten Brennstoffspray homogen und mit möglichst geringer räumlicher Tröpfchenpackungsdichte vorliegt. Die radialen Schlitze 40 verlaufen nicht bis zum Scheibenzentrum, da ansonsten aus ihrem Schnittpunkt im Scheibenzentrum ein kompakter Schnurstrahl austreten würde. Durch die Oberflächenspannung würde nach dem Austreten des Fluids aus der Düsenplatte 23 ein zentraler Schnurstrahl mit schlechter Zerstäubungswirkung entstehen. Die Schlitze 40 erstrecken sich bis zu einem möglichst großen Durchmesser des Abspritzbereichs 36, um den abgespritzten Sprayquerschnitt zugunsten einer geringen räumlichen Tröpfchenpackungsdichte groß zu machen. Da die Schlitze 40 keinen Schnittpunkt und also keinen gemeinsamen Ausgangspunkt haben, liegt in der Mitte der Düsenplatte 23 ein schlitzfreier zentraler Bereich 41 vor. Die Begrenzungswände der Schlitze 40 verlaufen senkrecht, bedingt durch die z. B. kostengünstige Herstellung mit der Galvanoabformtechnik (MIGA-Technik: Mikrostrukturierung, Galvanoformung, Abformung).

In der Figur 2 ist eine Düsenplatte 23 gezeigt, die acht gleichmäßig verteilte, also im Winkelabstand von jeweils 45° angeordnete Schlitze 40 aufweist. Bei einem äußeren Durchmesser von 5,5 mm besitzt die Düsenplatte 23 z. B. einen Durchmesser des Abspritzbereichs 36 von 4,2 mm, womit sich eine Breite des Außenbereichs 35 von 0,65 mm ergibt. Die im Abspritzbereich 36 befindlichen Schlitze 40 haben beispielsweise eine Länge von 0,9 mm, wobei sich die Schlitze 40 z. B. zwischen einem inneren Durchmesser von 1,6 mm und einem äußeren Durchmesser von 3,4 mm im Abspritzbereich 36 erstrecken. Die Schlitzweite liegt bei ca. 25 *µ*m. Üblich werden Schlitzweiten zwischen 20 *µ*m und 50 *µ*m sein. Diese beispielhaften Größenangaben zu den Abmessungen der Düsenplatte 23 sowie alle weiteren in der Beschreibung angegebenen Maße dienen nur dem besseren Verständnis und schränken die Erfindung in keiner Weise ein. Ebenso ist auch die angegebene Anzahl der Schlitze 40 nur beispielhaft zu verstehen, da jederzeit z. B. vier, zwölf oder sechzehn Schlitze 40 denkbar sind.

Stromauf der Schlitze 40 ergibt sich durch die dickere Ausbildung des Außenbereichs 35 ein Hohlraum, so daß der Abspritzbereich 36 den Boden einer Vertiefung der Düsenplatte 23 darstellt. Diese Vertiefung wird teilweise von dem Ventilsitzkörper 16 von außen her überdeckt, wobei die Schlitze 40 vollständig über ihre radiale Erstreckung bzw. ihre Länge überdeckt sein sollten. Dadurch ist ein sogenannter S-Schlag in der Fluidströmung erzielbar, durch den unter anderem eine gleichmäßige Feinstzerstäubung des Fluids ohne Zusatzenergie möglich ist. Durch den S-Schlag mit den starken Strömungsumlenkungen wird der Strömung eine starke, zerstäubungsfördernde Turbulenz aufgeprägt. Durch die Überdeckung der Schlitze 40 erhält die Strömung zwangsläufig eine Radialkomponente nach außen. Diese Radialströmungskomponente bleibt auch beim Durchtritt durch die radial verlaufenden Schlitze 40 erhalten. Dadurch wird der aus jedem Schlitz 40 austretende Flachstrahl schräg nach außen abgespritzt. In der Gesamtheit tritt folglich ein kegelförmiges Spray mit dem gewünschten großen Durchmesser aus der Radialspaltdüse aus. Der Spraykegelwinkel läßt sich durch verschiedene Maßnahmen variieren. So beeinflussen der Abstand vom Ventilsitz zu den Schlitzen 40, der Überdeckungsgrad des Abspritzbereichs 36 durch den Ventilsitzkörper 16 sowie die radiale Anordnung der Schlitze 40 die Größe des Spraykegels.

Ein nicht gezeigtes Ausführungsbeispiel sieht vor, daß die Überdeckung der Schlitze 40 bereits durch die Düsenplatte 23 selbst erfolgt, indem z. B. eine zweite Scheibenlage vorgesehen ist, die damit baulich direkt zur Düsenplatte 23 gehört.

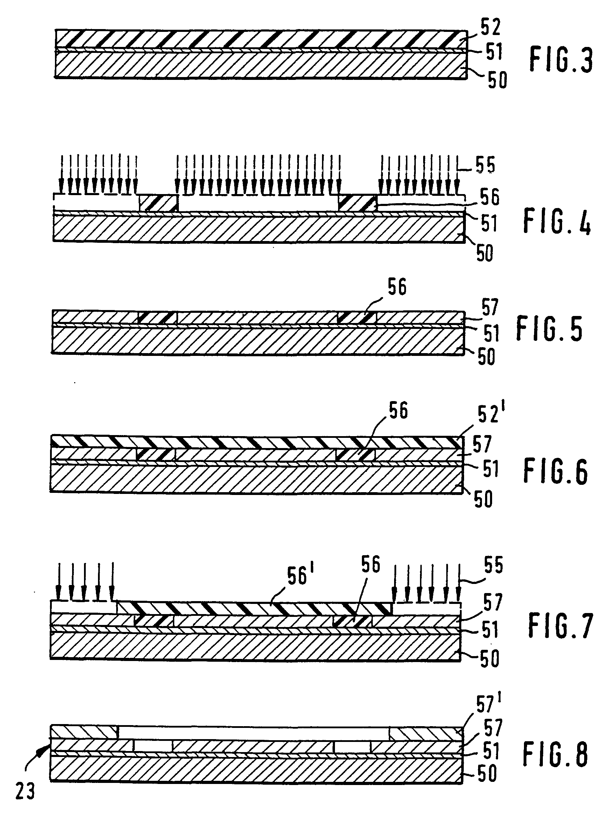

Anhand der Figuren 3 bis 8 wird ein zur Herstellung der Düsenplatte 23 besonders geeignetes und bevorzugtes Herstellungsverfahren näher verdeutlicht. Dabei zeigen die Figuren nicht genau das in der Figur 2 dargestellte Ausführungsbeispiel einer Düsenplatte 23, sondern nur das Herstellungsprinzip verdeutlichende Anordnungen. Aufgrund der hohen Anforderungen an die Strukturdimensionen und die Präzision von Einspritzdüsen gewinnen Mikrostrukturierungsverfahren heute eine zunehmende Bedeutung für ihre großtechnische Herstellung. Charakteristisch für das Verfahren ist, daß es auch in großflächigem Maßstab eine hohe Präzision der Strukturen gewährleistet, so daß es ideal für eine Massenfertigung mit sehr großen Stückzahlen einsetzbar ist. Auf einem Wafer kann eine Vielzahl von Düsenplatten 23 gleichzeitig gefertigt werden.

Ausgangspunkt für das Verfahren ist ein ebenes und stabiles Substrat 50, das z. B. aus Silizium, Glas oder Keramik bestehen kann. Die üblichen Dicken dieser Substratplatte 50 liegen zwischen 0,5 mm und 2 mm. Nach der Reinigung des Substrats 50 wird zunächst wenigstens eine Hilfsschicht 51 auf das Substrat 50 aufgalvanisiert. Dabei handelt es sich beispielsweise um eine Galvanikstartschicht (z. B. Cu), die zur elektrischen Leitung für die spätere Galvanik benötigt wird. Diese Hilfsschicht 51 kann auch als Stopschicht für die nachfolgenden Mikrostrukturierungsverfahren bzw. als Opferschicht dienen, um später ein einfaches Vereinzeln der Düsenplatten 23 z. B. durch Ätzung zu ermöglichen. Anschließend wird auf die Hilfsschicht 51 eine mikrostrukturierbare Schicht 52 ganzflächig aufgebracht. Dafür bietet sich besonders das Auflaminieren eines thermoplastisch verformbaren Kunststoffs (z. B. Polymethylmethacrylat PMMA) an, der dann folienartig auf der Hilfsschicht 51 aufliegt (Figur 3).

Über eine nicht dargestellte Maske erfolgt nun die Strukturierung der Schicht 52. Diese Mikrostrukturierung kann besonders wegen der hohen Präzision durch Diamantdrehen oder Ablatieren mittels Excimerlasers 55 (Figur 4) vorgenommen werden. Der z. B. zur Mikrostrukturierung der Schicht 52 verwendete Excimerlaser 55 zeichnet sich durch eine sehr hohe Leistungsdichte und eine kurze Wellenlänge (typisch λ = 193 nm) aus. Nach dieser Bearbeitung verbleibt eine Galvanikmaske 56 in der PMMA-Schicht 52. Diese Struktur in der Schicht 52 stellt eine Negativstruktur zur späteren Düsenplatte 23 dar. Um die Galvanikmaske 56 wird nachfolgend in einem galvanischen Bad Metall 57 (Figur 5) aufgalvanisiert. Das Metall 57 legt sich durch das Galvanisieren eng an die Kontur der Galvanikmaske 56 an, so daß die vorgegebenen Konturen formtreu in ihm reproduziert werden. Üblicherweise kommen beim Galvanisieren Ni, NiCo, NiFe oder Cu zum Einsatz.

Entsprechend dem gewünschten Aufbau der Düsenplatte 23 können nun die Verfahrensschritte der Mikrostrukturierung und Galvanoabformung wiederholt werden (Figuren 6 und 7). Die Bezugszeichen mit Strich weisen auf einen wiederholten Prozeß hin. Nach Abschluß der Galvanikprozesse werden die Galvanikmasken 56, 56' entfernt. Bei Verwendung von PMMA für die zu strukturierenden Schichten 52, 52' eignet sich besonders Essigsäureethylester zum Ablösen. Nach diesem Herauslösen liegt die Düsenplatte 23 auf dem Substrat 50 bereits in fertiger Ausführungsform vor (Figur 8). Abschließend erfolgt das Vereinzeln der Düsenplatten 23. Dazu werden die Hilfsschichten 51 durch Ätzung entfernt und die Düsenplatten 23 vom Substrat 50 abgehoben.

Ein anderes, sehr ähnliches Herstellungsprinzip sieht vor, entsprechend der MIGA-Technik in oben beschriebener Form Abformwerkzeuge herzustellen, die genau invers (Negativstruktur) zu den gewünschten Düsenplatten 23 ausgebildet sind. Dabei führen besonders hohe Stückzahlen der an den Abformwerkzeugen abzuformenden Düsenplatten 23 zu einer kostengünstigen rentablen Fertigung. Diese Abformwerkzeuge als Negative der Düsenplatten 23 sollen so exakt bearbeitet sein, daß sie mindestens zehntausendmal bei gleichbleibender Qualität einsetzbar sind. Anstelle der bisher erwähnten Verfahren können die Schlitze 40 der Düsenplatte 23 beispielsweise auch mittels Erodieren eingebracht werden.

Die erfindungsgemäßen Düsenplatten 23 sind allgemein geeignet, wenn eine homogene, gleichmäßige Verteilung feinster Tröpfchen beim Versprühen von Flüssigkeiten, wie z.B. auch Lacke, erzielt werden soll.

## Patentansprüche

1. Ventil, insbesondere Brennstoffeinspritzventil für Brennstoffeinspritzanlagen von Brennkraftmaschinen, mit einer Ventillängsachse (2), mit einem Ventilschließkörper (7), der mit einer Ventilsitzfläche (29) zusammenwirkt, mit einer eine Vielzahl von schmalen Schlitzen (40) als Austrittsöffnungen aufweisenden Düsenplatte (23) stromabwärts der Ventilsitzfläche (29), dadurch gekennzeichnet, dass die Düsenplatte (23) eine Mehrzahl von radial verlaufenden, die Abspritzgeometrie bildenden Schlitzen (40) aufweist, die sternförmig angeordnet sind, wobei sich die einzelnen Schlitze (40) nicht berühren.

2. Ventil nach Anspruch 1, dadurch gekennzeichnet, daß die Schlitzweiten der Schlitze (40) zwischen 20 *µ*m und 50 *µ*m liegen.

3. Ventil nach Anspruch 1, dadurch gekennzeichnet, daß acht Schlitze (40) in der Düsenplatte (23) eingebracht sind, die jeweils einen Winkelabstand von 45° zueinander haben.

4. Ventil nach Anspruch 1, dadurch gekennzeichnet, daß die Düsenplatte (23) einen inneren Abspritzbereich (36) besitzt, in dem die Schlitze (40) ausgebildet sind, und der Abspritzbereich (36) vollständig von einem Außenbereich (35) umgeben ist.

5. Ventil nach Anspruch 4, dadurch gekennzeichnet, daß die Schlitze (40) vertieft gegenüber einer oberen Stirnfläche (38) des Außenbereichs (35) der Düsenplatte (23) verlaufen.

6. Ventil nach Anspruch 5, dadurch gekennzeichnet, daß die Schlitze (40) der Düsenplatte (23) im montierten Zustand mit axialem Abstand überdeckt sind, so daß die in die Vertiefung eintretende Mediumströmung zu den Schlitzen (40) hin in radialer Richtung umgelenkt wird.

7. Ventil nach Anspruch 1, dadurch gekennzeichnet, daß die Düsenplatte (23) mittels Mikrostrukturierungsverfahren in Kombination mit Galvanoabformung hergestellt ist.

8. Ventil nach Anspruch 7, dadurch gekennzeichnet, daß die Düsenplatte (23) unter anderem durch Diamantdrehen als Mikrostrukturierungsverfahren hergestellt ist.

9. Ventil nach Anspruch 7, dadurch gekennzeichnet, daß die Düsenplatte (23) unter anderem durch Ablatieren mittels eines Excimerlasers (55) als Mikrostrukturierungsverfahren hergestellt ist.

10. Ventil nach Anspruch 7, dadurch gekennzeichnet, daß bei der Galvanoabformung als Material für eine Galvanikmaske (56) Polymethylmethacrylat (PMMA) eingesetzt ist.

11. Ventil nach Anspruch 1, dadurch gekennzeichnet, daß die Schlitze (40) in der Düsenplatte (23) mittels Erodieren hergestellt sind.

## Claims

1. Valve, in particular fuel injection valve for fuel injection systems of internal combustion engines, with a valve longitudinal axis (2), with a valve closing element (7), which interacts with a valve seat-surface (29), and with a nozzle plate (23) which is downstream of the valve seat-surface (29) and has a multiplicity of narrow slits (40) as outlet openings, characterized in that the nozzle plate (23) has a plurality of radially running slits (40) which form the injection geometry and are arranged in a star shape, the individual slits (40) not touching.

2. Valve according to Claim 1, characterized in that the slit widths of the slits (40) lie between 20 µm and 50 µm.

3. Valve according to Claim 1, characterized in that eight slits (40) are provided in the nozzle plate (23), and are respectively at angular intervals of 45° from one another.

4. Valve according to Claim 1, characterized in that the nozzle plate (23) has an inner injection region (36), in which the slits (40) are formed, and the injection region (36) is completely surrounded by an outer region (35).

5. Valve according to Claim 4, characterized in that the slits (40) run in a depression with respect to an upper end face (38) of the outer region (35) of the nozzle plate (23).

6. Valve according to Claim 5, characterized in that the slits (40) of the nozzle plate (23) are covered at an axial distance in the fitted state, so that the medium flow entering the depression is deflected towards the slits (40) in the radial direction.

7. Valve according to Claim 1, characterized in that the nozzle plate (23) is produced by means of microstructuring processes in combination with galvanoplating.

8. Valve according to Claim 7, characterized in that the nozzle plate (23) is produced inter alia by diamond turning as a microstructuring process.

9. Valve according to Claim 7, characterized in that the nozzle plate (23) is produced inter alia by ablation by means of an excimer laser (55) as a microstructuring process.

10. Valve according to Claim 7, characterized in that polymethylmethacrylate (PMMA) is used as the material for an electroplating mask (56) in the galvanoplating.

11. Valve according to Claim 1, characterized in that the slits (40) in the nozzle plate (23) are produced by means of erosion.

## Revendications

1. Soupape, notamment injecteur de carburant, pour des installations d'injection de carburant de moteurs à combustion interne, ayant un axe longitudinal (2), un organe d'obturation (7) coopérant avec une surface formant siège de soupape (29), une plaque à buses (23) munie d'un grand nombre de fentes étroites (40) comme orifices de sortie, en aval de la surface formant siège (29),
caractérisée en ce que
la plaque à buses (23) comporte plusieurs fentes (40) dirigées radialement et copiant la géométrie d'éjection, ces fentes étant disposées en étoile et les différentes fentes (40) ne se touchant pas.

2. Soupape selon la revendication 1,
caractérisée en ce que
la largeur des fentes (40) est comprise entre 20 *µ*m et 50 *µ*m.

3. Soupape selon la revendication 1,
caractérisée en ce que
la plaque à buses (23) comporte huit fentes (40) distantes angulairement chacune de 40°.

4. Soupape selon la revendication 1,
caractérisée en ce que
la plaque à buses (23) possède une zone d'éjection intérieure (36) dans laquelle sont réalisées les fentes (40), et une zone extérieure (35) entourant complètement la zone d' éjection (36).

5. Soupape selon la revendication 4,
caractérisée en ce que
les fentes (40) sont situées en creux par rapport à la surface frontale supérieure (38) de la zone extérieure (35) de la plaque à buses (23).

6. Soupape selon la revendication 5,
caractérisée en ce que
les fentes (40) de la plaque à buses (23), à l'état monté sont recouvertes d'une distance axiale de façon que la veine de fluide qui arrive dans la cavité soit déviée dans la direction radiale vers les fentes (40).

7. Soupape selon la revendication 1,
caractérisée en ce que
la plaque à buses (23) est fabriquée par un procédé de micro-structuration en combinaison avec un procédé de moulage galvanique.

8. Soupape selon la revendication 7,
caractérisée en ce que
la plaque à buses (23) est fabriquée entre autres par travail au diamant comme procédé de micro structuration.

9. Soupape selon la revendication 7,
caractérisée en ce que
la plaque à buses (23) est fabriquée entre autres par ablation à l'aide d'un laser Excimer (55) comme procédé de micro-structuration.

10. Soupape selon la revendication 7,
caractérisée en ce que
dans le moulage galvanique, la matière du masque de galvanique (56) est du polyméthylmétacrylate (PMMA).

11. Soupape selon la revendication 1,
caractérisée en ce que
les fentes (40) de la plaque à buses (23) sont fabriquées par érosion.
